# FASCICULE DE BREVET EUROPEEN

(11) **EP 1 605 333 B1**
(45) Date de publication et mention de la délivrance du brevet: **10.12.2008**
(21) Numéro de dépôt: 05104910.4
(22) Date de dépôt: 06.06.2005
(51) Int. Cl.: G06F 21/00

(54) **Contrôle de l'exécution d'un programme**
Programmausführungssteuerung
Program execution control

(30) Priorité: 07.06.2004 FR 0451122
(43) Date de publication de la demande: 14.12.2005
(73) Titulaire: PROTON WORLD INTERNATIONAL N.V., 1930 ZAVENTEM (BE)
(72) Inventeur: Modave, Jean-Louis, 1340, Ottignies (BE)
(74) Mandataire: de Beaumont, Michel

(56) Documents cités:
- WO-A-03/042547
- FR-A- 2 757 972

## Description

La présente invention concerne, de façon générale, l'exécution de programmes (codes logiciels) par un microprocesseur intégré. L'invention concerne plus particulièrement le contrôle de l'intégrité d'un programme lors de son exécution, afin de vérifier qu'il est exécuté avec un séquencement normal, que le programme n'a pas été modifié volontairement ou accidentellement depuis son installation, que ce soit préalablement ou au cours de son exécution. De telles modifications peuvent provenir de virus informatiques ou de tentatives de piratage consistant, plus particulièrement, en des injections de fautes dans l'exécution de programmes.

Une attaque par injection de fautes, par exemple dite de déroutement, peut consister en l'introduction d'une perturbation sur l'alimentation du processeur pendant un court instant. Une telle attaque peut provoquer un saut inopiné dans la séquence d'exécution du programme. Un exemple d'application est le cas d'un processeur devant décider si une opération particulière est autorisée (par exemple, dans le cas de cartes bancaires, l'autorisation d'une transaction bancaire après authentification de l'utilisateur).

Ce type d'attaques touchant, par exemple, l'exécution d'un algorithme de cryptographie peut consister à faire sauter le compteur programme afin de provoquer un saut inopiné dans la séquence d'exécution par quelque moyen que ce soit, même si le programme n'est pas arrêté ou est en boucle lors d'une authentification. Par exemple, pour des algorithmes de cryptographie (DSA, RSA, DES, AES, etc.), les clés secrètes peuvent être découvertes grâce à un piratage provoquant des sauts d'instructions.

Selon un autre aspect, le pirate cherche à modifier le séquencement du programme lors de son exécution. Dans le cas d'une carte à puce, cela revient tantôt à modifier l'ordre de commandes reçues par le processeur de la carte, tantôt à insérer des commandes anormales dans des sessions de communication avec la carte. L'objectif du pirate n'est alors pas nécessairement de découvrir un secret, mais de détourner l'application exécutée par la carte, par exemple pour prolonger frauduleusement une durée d'utilisation gérée par cette carte (titre de transport par exemple).

Selon l'application, le programme à protéger est contenu dans une mémoire morte (ROM) inscrite à la fabrication et non modifiable ou dans une mémoire non volatile réinscriptible, par exemple, une mémoire flash.

Pour protéger le code logiciel lors de son exécution, on prévoit généralement une vérification périodique de ce code à partir d'une clé d'authentification stockée dans une mémoire ou dans le circuit intégré, par exemple lors du stockage initial du programme ou de son installation. Par exemple, on calcule une signature (application d'un algorithme de chiffrement à au moins une partie du code logiciel) lors de l'installation ou de l'écriture du programme. Cette signature est ensuite stockée dans ou hors du circuit intégré exécutant le programme. Puis, lors de l'exécution du code logiciel, le système d'exploitation recalcule une signature sur la base du même algorithme que celui ayant servi à la génération de la signature initiale. On compare alors la signature courante avec la signature prédéterminée. Une divergence entre ces deux signatures signifie que le programme stocké a été modifié et permet donc d'identifier une attaque potentielle, involontaire ou accidentelle. Un exemple d'un tel procédé de vérification d'intégrité est décrit dans le brevet américain n° 5 442 645.

Le document FR 2 757 972 décrit un procédé de contrôle d'exécution avec des compteurs.

Un inconvénient des solutions connues à signatures est que, en cas de mise à jour du code logiciel par une version plus récente (cas où le programme est dans une mémoire réinscriptible), il est alors nécessaire de mettre à jour la signature prédéterminée. Une telle mise à jour peut être pénalisante notamment en cas de mise à jour fréquente du système. Par ailleurs, les mises à jour de programmes interviennent de plus en plus souvent par le biais de réseaux de communication de type Internet. Il n'est alors pas souhaitable de multiplier les calculs de signature à réenregistrer dans le circuit intégré côté utilisateur.

Un autre inconvénient des solutions classiques à signatures est que la vérification d'intégrité est statique, c'est-à-dire qu'au début du programme, on vérifie si la signature est bien autorisée. Par conséquent, un tel système de protection est en pratique inefficace en cas d'injection de fautes pendant l'exécution du programme.

Une autre solution connue pour contrôler l'exécution d'un programme est d'effectuer certaines opérations en double, de façon à disposer d'une redondance sur les données pour vérifier la cohérence entre les deux exécutions.

Un inconvénient commun aux techniques connues exposées ci-dessus est qu'elles sont gourmandes en ressources de calcul. Par conséquent, elles sont inadaptées à des microcontrôleurs intégrés de faible puissance, comme par exemple ceux disponibles dans les cartes à puce.

Un problème technique supplémentaire qui se pose dans le contrôle de l'exécution d'un programme est qu'une même section du programme (par exemple, une écriture d'un nombre dans la mémoire non volatile) peut être plus ou moins critique selon les sections qui ont été exécutées préalablement par ce programme. En d'autres termes, une même opération réalisée par le microcontrôleur doit ou non être considérée comme une tentative de piratage selon l'endroit où elle se situe dans l'exécution du programme. Par exemple, la vérification (demande de saisie par le lecteur de carte) d'un code secret plusieurs fois consécutivement dans une carte à puce, sans que cette vérification soit accompagnée d'une opération (débit, interrogation de solde, etc.) entre les vérifications, est suspecte. La même vérification de code est par contre normale si elle est suivie d'une opération de traitement conditionnée par cette vérification.

Ce problème n'est pas résolu par les techniques connues de contrôle de l'exécution d'un programme.

La présente invention vise à pallier les inconvénients des solutions connues de contrôle d'exécution de programmes et, plus particulièrement, à permettre une vérification dynamique, c'est-à-dire qui détecte les erreurs dans le séquencement d'un programme qu'elles proviennent ou non d'injections de fautes lors de son exécution.

L'invention vise également à proposer une solution qui tienne compte du caractère plus ou moins critique d'une opération selon les opérations qui l'ont précédées.

L'invention vise également à proposer une solution ne nécessitant pas une mise à jour de signature à chaque mise à jour du code logiciel à protéger.

L'invention vise également à proposer une solution qui soit compatible avec une exécution sur un microcontrôleur de puissance limitée de type carte à puce.

L'invention vise en outre à proposer une solution qui soit compatible avec une remise en fonctionnement du microcontrôleur après blocage suite à un défaut dans l'exécution du programme.

Pour atteindre ces objets ainsi que d'autres, la présente invention prévoit un procédé de contrôle automatique de l'exécution d'un programme par un microprocesseur, selon les revendications attachées ci-après.

Selon un mode de mise en oeuvre de la présente invention, la comparaison par rapport au seuil critique est effectuée à chaque fin de fonction.

Selon un mode de mise en oeuvre de la présente invention, un traitement d'erreur est mis en oeuvre quand la valeur courante devient inférieure, respectivement supérieure, au seuil critique, ledit traitement entraînant, de préférence, un blocage du microprocesseur.

Selon un mode de mise en oeuvre de la présente invention, la croissance, respectivement décroissance, du compteur à chaque exécution correcte d'une section est bornée par une deuxième valeur.

Selon un mode de mise en oeuvre de la présente invention, la première valeur d'initialisation du compteur est choisie de façon aléatoire entre deux bornes.

Selon un mode de mise en oeuvre de la présente invention, la deuxième valeur est choisie de façon aléatoire entre deux bornes relativement élevées par rapport aux deux bornes de la première valeur.

Selon un mode de mise en oeuvre de la présente invention, la croissance, respectivement décroissance, du compteur a lieu à chaque début de fonction.

Selon un mode de mise en oeuvre de la présente invention, la croissance, respectivement décroissance, du compteur a lieu à chaque fin de section.

Selon un mode de mise en oeuvre de la présente invention, la croissance, respectivement décroissance, du compteur avant un appel de section critique, est nulle.

Selon un mode de mise en oeuvre de la présente invention, les valeurs d'incréments et de décréments respectives sont choisies en fonction de leur caractère critique du point de vue de l'exécution du programme.

Selon un mode de mise en oeuvre de la présente invention, les étapes faisant croître et décroître le compteur consistent à incrémenter, respectivement décrémenter, le compteur.

L'invention prévoit également un microcontrôleur comprenant au moins un microprocesseur, une mémoire non volatile réinscriptible, une mémoire non volatile réinscriptible ou non de stockage d'au moins un programme à exécuter, et une mémoire vive, comportant des moyens pour exécuter le procédé de contrôle.

L'invention prévoit également une carte à puce comprenant un tel microcontrôleur.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 représente, de façon très schématique et sous forme de blocs, un exemple de microcontrôleur auquel s'applique plus particulièrement la présente invention ;
la figure 2 illustre un mode de mise en oeuvre du procédé de la présente invention par un exemple de contenu d'une mémoire du contrôleur de la figure 1 ;
la figure 3 est un organigramme simplifié d'un mode de mise en oeuvre du procédé de l'invention ; et
la figure 4 illustre le fonctionnement du procédé de l'invention dans l'exemple de la figure 2.

Les mêmes éléments ont été désignés par les mêmes références aux différentes figures. Par souci de clarté, seuls les éléments et étapes nécessaires à la compréhension de l'invention ont été représentés et seront décrits par la suite. En particulier, les opérateurs ou instructions concernés par la mise en oeuvre de l'invention n'ont pas été détaillés, l'invention s'appliquant quel que soit le type d'opérateur ou d'instruction. De plus, tous les constituants nécessaires à l'exécution d'un programme, que ce soit pour une mise en oeuvre logicielle ou au moyen d'une machine d'états en logique câblée, n'ont pas été détaillés, leur réalisation faisant appel à des éléments classiques.

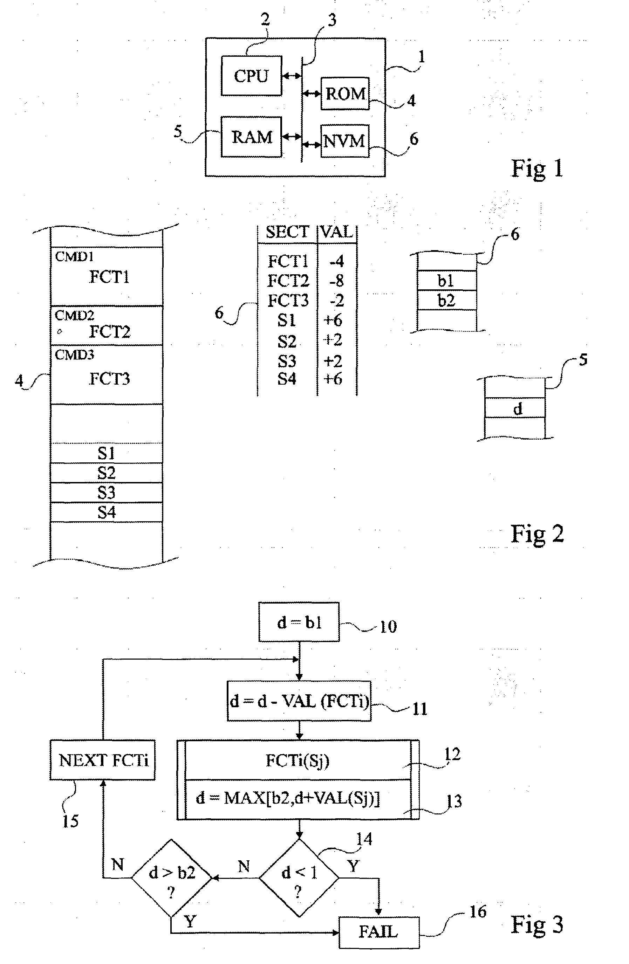

La figure 1 représente, de façon très schématique et sous forme de blocs, un mode de réalisation simplifié d'un microcontrôleur 1 de type carte à puce auquel s'applique plus particulièrement la présente invention. Un tel microcontrôleur 1 comprend une unité centrale de traitement 2 (CPU) communiquant par l'intermédiaire d'un bus 3 avec différentes mémoires, parmi lesquelles au moins une mémoire 4 (par exemple, une mémoire morte ROM ou une mémoire flash) de stockage de programmes à exécuter, une mémoire vive 5 (RAM) utilisée pendant l'exécution des programmes, et une mémoire 6 non volatile réinscriptible (NVM). La puce 1 comporte également des entrées-sorties (non représentées) vers l'extérieur, que ce soit sous la forme de contacts ou d'une antenne de communication.

L'invention sera décrite par la suite en relation avec un exemple d'application aux cartes à puce. On notera toutefois qu'elle s'applique plus généralement à n'importe quel élément électronique contenant un microcontrôleur d'exécution d'un programme, que les mémoires soient ou non intégrées avec le microprocesseur.

Une caractéristique de la présente invention est de découper le programme en fonctions mettant de préférence en oeuvre plusieurs sections, et d'affecter, à chaque fonction et/ou section d'un programme considéré comme sensible, une valeur plus ou moins importante selon que la section et/ou fonction est considérée comme plus ou moins critique du point de vue de la sécurité.

Selon un mode de réalisation préféré de l'invention, un compteur totalisateur est décrémenté (ou incrémenté) d'une valeur prédéterminée à chaque début de fonction et qui se trouve incrémenté (respectivement décrémenté), au fur et à mesure, des valeurs affectées aux différentes sections appelées par cette fonction. Cela revient à affecter un nombre de points différents à l'exécution d'une section selon la commande ou fonction au sein de laquelle elle se trouve être exécutée. Périodiquement, par exemple à chaque fin de fonction, le compteur totalisateur est comparé à un seuil critique (par exemple 1 dans le cas d'un décrément à chaque fonction) qui permet, s'il est atteint, de détecter un problème dans l'exécution du programme. Cela revient à établir un seuil de confiance d'exécution du programme qui se trouve adapté en fonction des commandes exécutées par celui-ci.

Un deuxième seuil est de préférence utilisé comme seuil maximal pour éviter que le compte totalisateur ne devienne trop important.

Pour simplifier, l'invention sera décrite en considérant un incrément affecté aux sections et un décrément affecté aux fonctions. Tout ce qui sera décrit par la suite se transpose sans difficulté au cas inverse (décrément affecté aux sections et incrément affecté aux fonctions).

Dans un mode de réalisation simplifié, on se contente d'incrémenter un compteur à chaque fois qu'une section est exécutée correctement, la valeur de l'incrément étant fonction de la position de la section dans le programme (de la fonction au cours de laquelle elle est exécutée). Cela revient à affecter un décrément nul aux fonctions.

La mise en oeuvre de l'invention requiert une étape préparatoire lors de la conception du programme qui est d'affecter aux différentes commandes (fonctions) et sections des valeurs d'incrément et de décrément pour conduire à des variations acceptables dans le cas d'une exécution normale du programme et à des variations détectables en cas de déroulement anormal. La détermination de tels incréments et décréments apparaîtra à la portée de l'homme du métier une fois exposée les exemples simplifiés de l'invention qui suivent.

La figure 2 illustre, par une vue schématique de contenus arbitraires de mémoires de la carte de la figure 1, un exemple de mise en oeuvre de la présente invention.

On suppose qu'un programme présent dans la mémoire morte 4 comprend trois fonctions FCT1, FCT2 et FCT3 appelées chacune par trois commandes différentes CMD1, CMD2 et CMD3. On suppose également que le programme contient quatre sections ou sous-programmes S1, S2, S3 et S4. D'autres sections ou fonctions peuvent être présentes dans le programme sans être pour autant considérées comme critiques du point de vue de la sécurité selon l'invention. En d'autres termes, il n'est pas nécessaire que toutes les commandes et sections soient surveillées par l'invention.

Dans l'étape préparatoire, on affecte à chacune des fonctions et sections des décréments, respectivement incréments. Ces valeurs sont stockées, par exemple, dans la mémoire non volatile 6 lors de l'installation du programme. En variante, elles sont elles-mêmes contenues dans la mémoire 4, par exemple étant directement dans le programme sous la forme de ligne d'instructions de décrément ou d'incrément ajoutées aux lignes des fonctions et sections. Les valeurs différentes affectées à une même section sont alors, par exemple, contenues dans une ligne de la section.

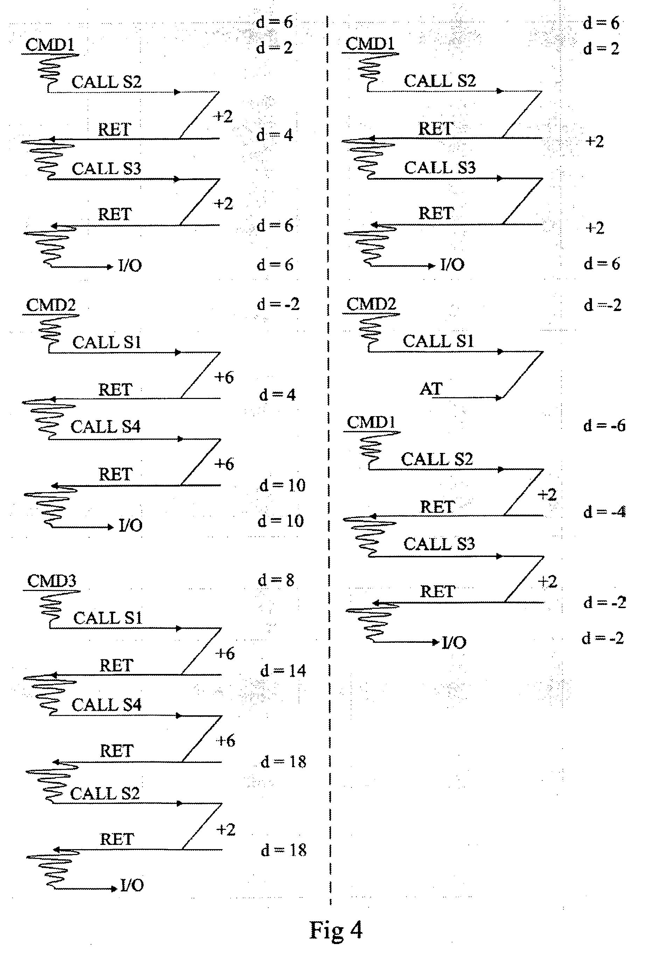

Dans l'exemple de la figure 2, les décréments respectifs -4, -8 et -2 sont affectés aux fonctions FCT1, FCT2 et FCT3 tandis que les incréments respectifs +6, +2, +2 et +6 sont affectés aux sections S1, S2, S3 et S4. L'utilisation de ces incréments et décréments sera mieux comprise par la suite en relation avec l'exposé des figures 3 et 4.

Selon l'invention, un premier nombre b1 correspondant à un niveau de confiance a priori est stocké dans la mémoire non volatile 6 ou dans la mémoire morte 4. Le nombre b1 sert à initialiser le compteur totalisateur représentant le niveau de confiance instantané d ou dynamique qui est mis à jour, par exemple, en étant contenu dans la mémoire 5 (RAM) à chaque exécution du programme. De préférence, le niveau de confiance instantané d est stocké dans la mémoire non volatile 6. Cela permet de mettre en oeuvre le procédé de vérification sur plusieurs sessions d'utilisation de la carte.

Dans le mode de mise en oeuvre qui sera décrit par la suite, on suppose le nombre instantané d initialisé à la valeur b1 à chaque mise sous tension de la carte, ce qui revient à un stockage du nombre d en mémoire vive.

Un deuxième seuil b2 est également stocké en mémoire non volatile (par exemple en mémoire 4 ou 6) et représente la borne maximale de confiance, c'est-à-dire le nombre que ne doit pas excéder le compteur d lors de l'exécution du programme.

Selon un mode de réalisation préféré de l'invention, les deux nombres b1 et b2 sont tirés au hasard en début de vie de la carte (par exemple, dans une phase de personnalisation par installation des clés secrètes). Pour respecter le fonctionnement de l'invention, le nombre b1 est tiré entre deux bornes relativement petites (par exemple, le nombre b1 est compris entre 4 et 8) tandis que le nombre b2 est tiré entre deux bornes plus importantes (par exemple, le nombre b2 est compris entre 16 et 64). Les bornes du tirage aléatoire sont choisies en fonction des évolutions attendues pour le nombre d lors de l'exécution normale du programme. Un tel mode de mise en oeuvre permet que les seuils contenus dans deux cartes différentes soient différents l'un de l'autre tout en restant compatibles avec un non franchissement du seuil critique en cas d'exécution normale du programme. Cela permet donc de rendre plus difficile la reproduction d'une attaque éventuelle d'une carte à une autre dans la mesure où, comme on le verra par la suite, les deux cartes se bloqueront alors à des phases différentes d'exécution du programme.

La figure 3 illustre, par un organigramme simplifié, un mode de mise en oeuvre simplifié du procédé de contrôle d'exécution selon l'invention.

En début d'exécution du programme, par exemple lors de la mise sous tension de la carte à puce, le compte d est initialisé à la valeur b1 (bloc 10, d = b1). Selon un mode de mise en oeuvre préféré, le compteur d est initialisé à la valeur b1 une fois pour toute (par exemple, après le tirage aléatoire de la valeur b1).

Puis, à chaque début d'exécution d'une fonction à surveiller, c'est-à-dire à chaque apparition d'une commande initiale CMDᵢ d'une fonction FCTᵢ, le compte d se trouve décrémenté de la valeur affectée à cette fonction (bloc 11, d = d-VAL(FCTᵢ). La fonction FCTᵢ du programme est alors exécutée (bloc 12, FCTᵢ(Sⱼ)) en mettant en oeuvre le cas échéant une ou plusieurs sections Sⱼ.

A chaque fin de section Sⱼ, le compte d est incrémenté de la valeur de cette section exécutée correctement (bloc 13, d = MAX[b2, d+VAL(Sⱼ)]), en étant borné à la valeur b2. Par exécution correcte, on entend selon l'invention une exécution d'une section jusqu'à son terme. En variante, l'incrément a lieu pendant l'exécution de la section, une fois que la phase (les instructions) considérée comme critique est passée. En fait, ce qui importe, c'est que l'incrément n'intervienne qu'en cas d'exécution correcte de la section. On se référera par la suite à la fin de l'exécution comme exemple préféré, mais tout ce qui sera décrit se transpose aisément à un incrément à un autre endroit de la section. Il en est de même pour le décrément en début de fonction. Il peut s'agir d'une ligne d'instruction spécifique à l'appel de la fonction mais plus généralement, ce qui importe, c'est que le décrément ait lieu avant l'appel d'une première section critique.

En variante, n'importe quelle fonction décroissante pourra être mise en oeuvre pour les fonctions FCTᵢ et n'importe quelle fonction croissante pourra être mise en oeuvre pour les sections Sⱼ. Par exemple, pour les fonctions FCTᵢ (bloc 11), on pourra utiliser la fonction de calcul : d = MIN[d ; d-VAL(FCTᵢ)], où MIN désigne la plus petite des deux valeurs entre crochets.

En fin d'exécution de la fonction FCTᵢ, généralement détectée par l'apparition d'une instruction I/O d'entrée-sortie d'information, la valeur du compte d est comparée (bloc 14, d < 1 ?) à un seuil critique prédéterminé. Le plus simple est l'unité, c'est-à-dire que le compte d doit toujours rester supérieur ou égal à 1 (positif) pour considérer l'exécution comme correcte. En variante, un autre seuil critique sera prévu.

Si le compte d a une valeur acceptable, l'exécution du programme se poursuit, dans un premier mode de mise en oeuvre, par l'appel de la fonction suivante (bloc 15, NEXT FCTᵢ). On revient alors au bloc 11 de décrément du compte d par la valeur affectée à cette fonction. Si par contre, le compte d devient négatif ou nul, le programme entame alors une procédure d'erreur (bloc 16, FAIL). En pratique, dans le cas d'une carte à puce, une telle procédure consiste à rendre la carte muette (mode MUTE). Toutefois, toute autre procédure classique mise en oeuvre en cas de détection d'erreur dans l'exécution d'un programme pourra être utilisée.

Dans le mode de réalisation représenté, en sortie négative N du test 14, on vérifie (bloc 17, d > b2) que le deuxième seuil b2 n'est pas dépassé avant de passer à la fonction suivante (bloc 15). Une telle vérification optionnelle permet de détecter une éventuelle perturbation du fonctionnement intervenue une fois la fonction FCTᵢ terminée.

Suite à la procédure d'erreur, plusieurs actions peuvent être entreprises, notamment pour une carte à puce. Selon un premier exemple, la carte est définitivement bloquée. En variante, une réinitialisation est autorisée. Dans ce cas, la valeur d'initialisation b1 du compteur est de préférence réduite. Par exemple, à chaque réinitialisation suite à un passage en mode muet (mute), le niveau b1 est divisé par 2. On limite ainsi le nombre de réinitialisations possibles, sans toutefois les exclure.

Selon une variante de mise en oeuvre, l'incrément du compteur lors de l'exécution d'une fonction, n'est pas effectué en fin de fonction, mais pas à pas au cours de son exécution. En fait, cette variante revient à subdiviser la fonction en plusieurs fonctions et à décrémenter le compteur à chaque exécution correcte d'une subdivision.

Selon une autre variante préférée, appliquée au cas où le compte d est stocké en mémoire non-volatile, on vérifie de plus à chaque début d'exécution que le compte se trouve bien dans la plage de valeurs acceptable. Dans le cas contraire, on passe immédiatement en mode d'erreur et le programme n'est pas exécuté. Une telle vérification peut également être effectuée pendant l'exécution du programme.

La figure 4 illustre un exemple de mise en oeuvre du procédé de l'invention tel qu'exposé en figure 3 en reprenant les exemples de décréments et incréments de la figure 2. La partie gauche de la figure 4 illustre une exécution normale du programme tandis que la partie droite illustre une exécution défaillante par l'apparition d'une attaque pendant l'exécution d'une section.

Dans l'exemple de la figure 4, on suppose que la valeur b1 est de 6 et que le seuil b2 est égal à 18. Le compte d est par conséquent initialisé à 6 en début d'exécution.

Par exemple, la première fonction exécutée est la fonction 1. A l'apparition de la commande CMD1, le compte d est alors décrémenté de 4 et prend donc la valeur 2. Les différentes instructions de la fonction 1 se déroulent et on suppose l'apparition d'un appel à la section 2 (CALL S2). Une fois cette section terminée, son incrément (+2) est comptabilisé, par exemple, à l'apparition de l'instruction de retour RET vers la fonction. On suppose que d'autres instructions non particulièrement surveillées se poursuivent dans la fonction jusqu'à un appel à la section 3 (CALL S3) qui s'exécute normalement provoquant un incrément de 2. En fin de commande 1, détectée par une instruction I/O de fourniture d'information vers l'extérieur, le compte d a donc une valeur 6. Cette valeur est testée (bloc 14, figure 3) et comme elle est supérieure à zéro, l'exécution du programme se poursuit.

On suppose que la fonction 2 est la fonction critique intervenant à la suite dans l'exécution du programme. Par conséquent, à l'apparition de la commande CMD2, le compte d est décrémenté de 8 et prend donc la valeur -2. On notera que d'autres instructions peuvent intervenir entre les fonctions 1 et 2 sans modifier le compte d si elles sont considérées comme insignifiantes du point de vue de la sécurité. La fonction 2 appelle successivement les sections 1 et 4 (CALL S1, CALL S4) qui, en étant exécutées correctement, incrémentent le compte d, deux fois de la valeur 6. Il en découle, en fin de fonction 2, un compte d ayant la valeur 10.

On suppose que la fonction suivante exécutée est la fonction 3 dans laquelle sont successivement appelées les sections 1, 4 et 2. A l'apparition de l'instruction de commande CMD3, le compte d passe à la valeur 8 (décrément de 2). A la suite de l'exécution de la section 1, il prend la valeur 14. La section 4 est ensuite exécutée, ce qui devrait donner au compteur d la valeur 20. Toutefois, comme le seuil maximal b2 a été fixé à la valeur 18, le compte d reste à la valeur 18. Il en est de même en fin de la section 2 où l'incrément de +2 ne peut pas être affecté au compteur d. Celui-ci termine donc l'exécution avec cette valeur maximale. On notera qu'il n'est pas nécessaire que le compte d ait atteint la valeur maximale en fin d'exécution du programme. Ce qui importe c'est qu'il reste entre le seuil critique (1) et la valeur maximale (18).

Les appels des sections 1 et 4 dans les fonctions 2 et 3 illustrent qu'un poids différent peut être affecté aux mêmes sections selon l'endroit où elles se déroulent dans le programme. En effet, l'exécution des sections 1 et 4 dans le cadre de la commande 2 conduit à incrémenter le compteur d'une valeur totale de 4 (décrément de 8 par l'initialisation de la fonction suivie d'un incrément de 12 par exécution correcte des deux sections). Dans le cadre de la fonction 3, l'initialisation de la commande conduisant à un décrément de 2, l'exécution des sections 1 et 4 conduit à un incrément global de 10. Cela revient à dire que les sections 1 et 4 (par exemple, mise à jour du compte totalisateur d'un porte-monnaie électronique) sont considérées comme moins critiques lorsqu'elles sont exécutées dans le cadre de la commande 3 (qui suit, par exemple, une lecture de ce compte totalisateur) que lorsqu'elles sont exécutées dans le cadre de la commande 2 (par exemple, une mise à jour du solde par rechargement du porte-monnaie électronique).

En partie droite de la figure 4, le même déroulement du programme a été repris en supposant une attaque lors de l'exécution de la section 1 dans la fonction 2. Cette attaque a été symbolisée par une flèche AT interrompant l'exécution de la section. Le compte d qui a été décrémenté au début de la commande n'a donc pas été incrémenté par les valeurs des sections 1 et 4 dans la fonction 2.

En supposant que cette attaque fait partie d'une tentative de piratage consistant à interrompre l'exécution du programme toujours au même endroit (par exemple au sein d'une boucle d'un algorithme de cryptographie particulier), le programme se trouve réexécuté depuis la commande 1, mais sans que le compte d ait été réinitialisé. Par conséquent, la deuxième exécution de la commande 1 supposée normale permet au compte d d'acquérir deux fois 2 points par l'exécution des sections 2 et 3 en ayant été initialement décrémenté de 4 par l'appel à la fonction 1. A la fin de la deuxième exécution de la fonction 1, le compte d a une valeur -2 et la carte est rendue muette.

Même si l'invention ne permet pas de bloquer immédiatement le pirate à la première attaque comme cela est illustré par la figure 4 (par exemple, si le compte d est suffisamment important avant l'attaque), il finit toujours par être bloqué si le programme n'est pas exécuté jusqu'à son terme.

Un avantage de la présente invention est qu'elle permet de détecter dynamiquement un défaut (volontaire ou accidentel) dans l'exécution d'un programme. Un autre avantage de l'invention est que sa mise en oeuvre ne requiert que peu de ressources. En effet, il suffit d'une table de correspondance des incréments-décréments affectés aux différentes fonctions et sections (cette table peut même être omise si les incréments-décréments sont directement écrits dans le programme), et de trois espaces de stockage pour les valeurs respectives b1, b2 et d (plus un quatrième si le compte d est comparé à un seuil critique différent de l'unité).

Un autre avantage de la présente invention est qu'en cas de modification du programme (mise à jour, téléchargement), il suffit de mettre à jour également la table des incréments-décréments si nécessaire pour que l'invention continue à fonctionner correctement. Dans le cas où les incréments-décréments sont directement dans le programme, c'est encore plus simple, ils remplacent automatiquement les anciennes valeurs. On notera que cette mise à jour est optionnelle, notamment si les modifications du programme ne conduisent pas à l'ajout de nouvelles sections ou fonctions critiques.

Un autre avantage de la présente invention dans son mode de réalisation préféré est qu'une tentative de piratage exécutée sur un lot de cartes est contrecarrée par les niveaux de confiance b1 et b2 différents d'une carte à l'autre.

L'identification des fonctions ou sections critiques d'un programme à surveiller peut s'effectuer de façon empirique ou de façon statique par des exécutions test du programme. Les "bonnes séquences" de commandes sont choisies pour avoir une tendance à augmenter le compte d représentant le niveau de confiance instantané tandis que les "mauvaises séquences" de commandes doivent avoir une tendance à diminuer ce niveau de confiance instantané.

Bien entendu la présente invention est susceptible de diverses variantes et modifications qui apparaîtront à l'homme de l'art. En particulier, les choix des incréments-décréments à appliquer aux différentes sections et fonctions sont à la portée de l'homme du métier en fonction de l'application et à partir des indications fonctionnelles données ci-dessus. De plus, le choix des sections et fonctions ou commandes à surveiller est également à la portée de l'homme du métier. Enfin, la mise en oeuvre pratique de l'invention par des moyens logiciels pour exécuter le procédé de vérification est à la portée de l'homme du métier et fait appel à des notions de programmation habituelles.

## Revendications

1. Procédé de contrôle automatique de l'exécution d'un programme comportant des fonctions mettant en oeuvre plusieurs sections, par un microprocesseur (2), **caractérisé en ce qu'**il comporte les étapes suivantes :
affecter un décrément numérique, respectivement un incrément numérique, à au moins une fonction (FCTᵢ) du programme ;
affecter un incrément, respectivement décrément, numérique à au moins une section (Sⱼ) considérée comme critique du point de vue de l'exécution du programme et appelée par la fonction ;
initialiser un compteur (d) à une première valeur (b1) choisie de façon aléatoire entre deux bornes ;
faire décroître, respectivement croître, à l'appel d'une fonction et avant un appel à la section critique, le compteur d'une valeur fonction du décrément, respectivement incrément, affecté à la fonction concernée du programme ;
faire croître, respectivement décroître, le compteur à chaque exécution correcte de la section, d'une valeur fonction de l'incrément, respectivement décrément, affecté à la section concernée ; et
comparer la valeur courante du compteur par rapport à un seuil critique prédéterminé pour détecter un problème éventuel dans l'exécution du programme.

2. Procédé selon la revendication 1, dans lequel la comparaison par rapport au seuil critique est effectuée à chaque fin de fonction (FCTᵢ).

3. Procédé selon la revendication 1 ou 2, dans lequel un traitement d'erreur est mis en oeuvre quand la valeur courante devient inférieure, respectivement supérieure, au seuil critique, ledit traitement entraînant, de préférence, un blocage du microprocesseur (2).

4. Procédé selon l'une quelconque des revendications 1 à 3, dans lequel la croissance, respectivement décroissance, du compteur (d) à chaque exécution correcte d'une section (Sⱼ) est bornée par une deuxième valeur (b2).

5. Procédé selon la revendication 4, dans lequel la deuxième valeur (b2) est choisie de façon aléatoire entre deux bornes relativement élevées par rapport aux deux bornes de la première valeur (b1).

6. Procédé selon l'une quelconque des revendications 1 à 5, dans lequel la croissance, respectivement décroissance, a lieu à chaque début de fonction.

7. Procédé selon l'une quelconque des revendications 1 à 6, dans lequel la croissance, respectivement décroissance, du compteur a lieu à chaque fin de section.

8. Procédé selon l'une quelconque des revendications 1 à 7, dans lequel la croissance, respectivement décroissance, du compteur avant un appel de section critique, est nulle.

9. Procédé selon l'une quelconque des revendications 1 à 8, dans lequel les valeurs d'incréments et de décréments respectives sont choisies en fonction de leur caractère critique du point de vue de l'exécution du programme.

10. Procédé selon l'une quelconque des revendications 1 à 9, dans lequel les étapes faisant croître et décroître le compteur consistent à incrémenter, respectivement décrémenter, le compteur.

11. Microcontrôleur comprenant au moins un microprocesseur (2), une mémoire non volatile réinscriptible (6), une mémoire non volatile réinscriptible ou non (4) de stockage d'au moins un programme à exécuter, et une mémoire vive (5), **caractérisé en ce qu'**il comporte des moyens pour exécuter le procédé selon l'une quelconque des revendications 1 à 10.

12. Carte à puce comprenant un microcontrôleur selon la revendication 11.

## Claims

1. A method of automatic control of the execution of a program comprising functions implementing a plurality of sections, by a microprocessor (2), **characterized in that** it comprises the following steps:
assigning a digital decrement, respectively a digital increment, to at least one function (FCTᵢ) of the program;
assigning a digital increment, respectively decrement, to at least one section (Sⱼ) considered as critical as to the program execution and called by the function;
setting a counter (d) to a first value (b1) randomly selected between two limits;
decreasing, respectively increasing, at the call of a function and before the call of the critical section the counter, by a value which is a function of the decrement, respectively increment, assigned to the concerned program function;
increasing, respectively decreasing, the counter on each correct execution of the section, by a value which is a function of the increment, respectively decrement, assigned to the concerned section; and
comparing the current value of the counter with a predetermined critical threshold for detecting a possible problem in the program execution.

2. The method of claim 1, wherein the comparison with the critical threshold is performed at each end of a function (FCTᵢ).

3. The method of claim 1 or 2, wherein an error processing is implemented when the current value becomes smaller, respectively greater, than the critical threshold, said processing resulting, preferably, in a blocking of the microprocessor (2).

4. The method of any of claims 1 to 3, wherein the increase, respectively decrease, of the counter (d) on each correct execution of a section (Sⱼ) is limited by a second value (b2).

5. The method of claim 4, wherein the second value (b2) is randomly selected between two limits relatively high with respect to the two limits of the first value (b1).

6. The method of any of claims 1 to 5, wherein the increase, respectively the decrease, of the counter occurs at each beginning of a function.

7. The method of any of claims 1 to 6, wherein the increase, respectively the decrease, of the counter occurs at each end of a section.

8. The method of any of claims 1 to 7, wherein the increase, respectively the decrease, of the counter before a critical section call, is zero.

9. The method of any of claims 1 to 8, wherein the respective increment and decrement values are selected according to their critical character as to the program execution.

10. The method of any of claims 1 to 9, wherein the steps of increasing and decreasing the counter consist of incrementing, respectively decrementing, the counter.

11. A microcontroller comprising at least one microprocessor (2), a rewritable non-volatile memory (6), a non-volatile memory (4), rewritable or not, for storing at least one program to be executed, and a RAM (5), comprising means for executing the method of any of claims 1 to 10.

12. A smart card comprising the microcontroller of claim 11.

## Patentansprüche

1. Ein Verfahren einer automatischen Steuerung zur Ausführung eines Programms, das Funktionen zum Implementieren einer Vielzahl von Abschnitten durch einen Mikroprozessor (2) aufweist, **gekennzeichnet durch** die folgenden Schritte:
Zuordnen eines digitalen Dekrements oder Verringerung, beziehungsweise eines digitalen Inkrements oder Erhöhung, zu wenigstens einer Funktion (FCTᵢ) des Programms;
Zuordnen eines digitalen Inkrements, beziehungsweise eines Dekrements, zu wenigstens einem Abschnitt (Sⱼ), der als kritisch gegenüber der Programmausführung betrachtet wird und **durch** eine Funktion aufgerufen wird;
Setzen eines Zählers (d) auf einen ersten Wert (b1), der zufällig zwischen zwei Grenzen gewählt wird;
Verringern, beziehungsweise Erhöhen des Zählers beim Aufruf einer Funktion und vor dem Aufruf des kritischen Abschnitts, **durch** einen Wert der eine Funktion des Dekrements, beziehungsweise Inkrements ist und der der betreffenden Programmfunktion zugeordnet ist;
Erhöhen, beziehungsweise Verringern des Zählers bei jeder korrekten Ausführung des Abschnitts, **durch** einen Wert, welcher eine Funktion des Inkrements, beziehungsweise Dekrements ist und der dem betreffenden Abschnitt zugeordnet ist; und
Vergleichen des aktuellen Werts des Zählers mit einem vorbestimmten kritischen Schwellenwert, zum feststellen eines möglichen Problems in der Programmausführung.

2. Verfahren nach Anspruch 1, wobei der Vergleich mit dem kritischen Schwellenwert an jedem Ende einer Funktion (FCTᵢ) durchgeführt wird.

3. Verfahren nach Anspruch 1 oder 2, wobei eine Fehlerverarbeitung implementiert wird, wenn der aktuelle Wert kleiner, beziehungsweise größer als der kritische Schwellenwert wird, wobei diese Verarbeitung vorzugsweise in einem Sperren des Mikroprozessors (2) resultiert.

4. Verfahren nach einem der Ansprüche 1 bis 3, wobei das Erhöhen, beziehungsweise Verringern des Zählers (d) bei jeder korrekten Ausführung eines Abschnitts (Sⱼ) durch einen zweiten Wert (b2) begrenzt ist.

5. Verfahren nach Anspruch 4, wobei der zweite Wert (b2) zufällig zwischen zwei Grenzen gewählt wird, die bezogen auf die Grenzen des ersten Werts (b1) relativ hoch liegen.

6. Verfahren nach einem der Ansprüche 1 bis 5, wobei das Erhöhen, beziehungsweise Verringern des Zählers an jedem Anfang einer Funktion auftritt.

7. Verfahren nach einem der Ansprüche 1 bis 6, wobei das Erhöhen, beziehungsweise Verringern des Zählers an jedem Ende eines Abschnitts auftritt.

8. Verfahren nach einem der Ansprüche 1 bis 7, wobei das Erhöhen, beziehungsweise Verringern des Zählers vor einem Aufruf eines kritischen Abschnitts Null ist.

9. Verfahren nach einem der Ansprüche 1 bis 8, wobei die entsprechenden Inkrement- und Dekrementwerte, entsprechend ihrer kritischen Beschaffenheit gegenüber der Programmausführung, gewählt werden.

10. Verfahren nach einem der Ansprüche 1 bis 9, wobei die Schritte des Erhöhens und Verringerns des Zählers aus dem Inkrementieren, beziehungsweise Dekrementieren des Zählers bestehen.

11. Mikrocontroller der folgendes aufweist:
wenigstens einen Mikroprozessor (2);
einen wiederbeschreibbaren nichtflüchtigen Speicher (6);
einen nichtflüchtigen Speicher (4), wiederbeschreibbar oder nicht, zum Speichern wenigstens eines ausführbaren Programms; und
eines RAM (5), der Mittel zum Ausführen des Verfahrens nach einem der Ansprüche 1 bis 10 aufweist.

12. Eine Smart-Card, die den Mikroprozessor nach Anspruch 11 aufweist.
